# EUROPÄISCHE PATENTSCHRIFT

(11) **EP 0 570 333 B1**
(45) Veröffentlichungstag und Bekanntmachung des Hinweises auf die Patenterteilung: **21.02.1996**
(21) Anmeldenummer: 93810304.1
(22) Anmeldetag: 27.04.1993
(51) Int. Cl.: C09B 62/505, C09B 67/22

(54) **Faserreaktive Anthrachinonfarbstoffe, Verfahren zu deren Herstellung und deren Verwendung**
Fiber-reactive anthraquinone dyes, process for their preparation and their use
Colorants anthraquinoniques réactifs sur la fibre, méthode pour leur préparation et leur utilisation

(30) Priorität: 04.05.1992 CH 1416/92
(43) Veröffentlichungstag der Anmeldung: 18.11.1993
(73) Patentinhaber: CIBA-GEIGY AG, CH-4002 Basel (CH)
(72) Erfinder: Adam, Jean-Marie, Dr., F-68300 Rosenau (FR)

(56) Entgegenhaltungen:
- EP-A- 0 210 951
- EP-A- 0 309 406
- FR-A- 2 167 635
- US-A- 3 632 611

## Beschreibung

Die vorliegende Erfindung betrifft neue faserreaktive Anthrachinonfarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind faserreaktive Anthrachinonfarbstoffe der Formel 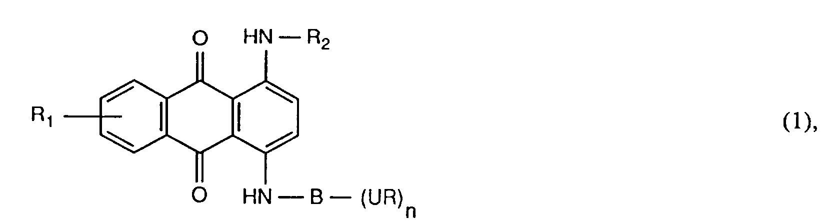
worin
R₁ Wasserstoff oder Halogen,
R₂ ein gegebenenfalls im Phenylring durch C₁-C₄-Alkyl, C₁-C₄-Alkoxy, C₂-C₄-Alkanoyl-amino, Carboxy, Hydroxy, Sulfo oder Halogen substituierter Phenyl-C₁-C₁₂-alkyl-oder Phenyl-C₅-C₇-cycloalkylrest ist, wobei der Cycloalkylrest durch C₁-C₄-Alkyl weitersubstituiert sein kann,
B gegebenenfalls durch C₁-C₄-Alkyl, C₁-C₄-Alkoxy, C₂-C₄-Alkanoylamino, Carboxy, Hydroxy, Sulfo oder Halogen weitersubstituiertes Phenyl ist,
U der Rest -CO- oder -SO₂-, n die Zahl 1, 2, 3 oder 4 und
R ein Rest der Formel

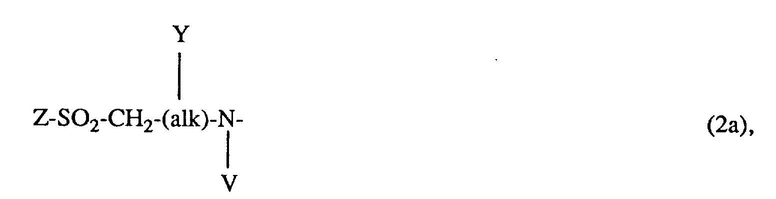

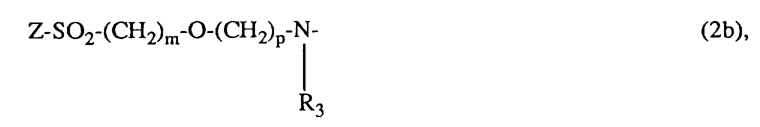

   Z-SO₂-(alk')-NH-(alk')-NH- (2c)

   oder 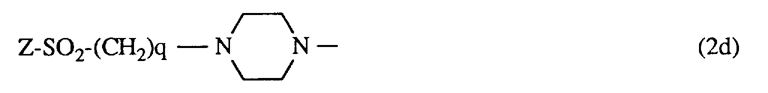
ist, wobei Z β-Sulfatoethyl, β-Thiosulfatoethyl, β-Phosphatoethyl, β-Acyloxyethyl, β-Halogenethyl oder Vinyl ist,
alk einen Alkylenrest mit 1 bis 7 Kohlenstoffatomen darstellt,
Y Wasserstoff, Halogen, Hydroxy, Cyano, C₁-C₄-Alkanoyloxy, C₁-C₅-Alkoxycarbonyl, Carbamoyl oder einen Rest -SO₂-Z bedeutet,
V Wasserstoff, gegebenenfalls durch C₁-C₂-Alkoxy, Halogen oder Hydroxy substituiertes C₁-C₄-Alkyl oder ein Rest der Formel 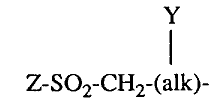 ist, worin Z, alk und Y die angegebenen Bedeutungen haben,
R₃ Wasserstoff oder C₁-C₈-Alkyl ist,
alk' unabhängig voneinander Polymethylenreste mit 2 bis 6 Kohlenstoffatomen bedeuten und
m, p und q unabhängig voneinander die Zahl 1, 2, 3, 4, 5 oder 6 sind.

Aus der US-A-3,632,611 und der FR-A-2,167,635 sind Farbstoffe bekannt, welche sich von den erfindungsgemässen Farbstoffen hinsichtlich der Reaktivgruppe unterscheiden. Aus der EP-A-210,951 und der EP-A-309,406 sind Farbstoffe bekannt, welche sich von den erfindungsgemässen Farbstoffen hinsichtlich des Restes R₂ unterscheiden.

Als Halogen kommt für R₁ z.B. Fluor, Chlor oder Brom, insbesondere Chlor, in Betracht.

Bedeutet R₂ einen Phenyl-C₁-C₁₂-alkylrest, so kann die C₁-C₁₂-Alkylengruppe geradkettig oder verzweigt sein. Als Beispiele für diese Alkylengruppe seien Methylen, Ethylen, n-Propylen, Isopropylen, n-Butylen, Isobutylen, sek.-Butylen, tert.-Butylen, sowie geradkettiges oder verzweigtes Pentylen, Hexylen, Heptylen oder Octylen genannt. Bevorzugt ist der C₁-C₈-Alkylenrest, wobei der sek.-Butylenrest von besonderem Interesse ist.

Bedeutet R₂ einen Phenyl-C₅-C₇-cycloalkylrest, so kommt als C₅-C₇-Cycloalkylen unsubstituiertes oder durch C₁-C₄-Alkyl, wie z.B. Methyl oder Ethyl, substituiertes Cyclopentylen oder Cyclohexylen, insbesondere Cyclohexylen, in Betracht.

Der Rest R₂ kann im Phenylring unsubstituiert oder ein- oder mehrfach substituiert sein, durch C₁-C₄-Alkyl, wie z.B. Methyl oder Ethyl, C₁-C₄-Alkoxy, wie z.B. Methoxy und Ethoxy, C₂-C₄-Alkanoylamino, wie z.B. Acetylamino oder Propionylamino, Carboxy, Hydroxy, Sulfo oder Halogen, wie z.B. Fluor, Brom oder insbesondere Chlor.

Der Rest B kann im Phenylring keine weiteren Substituenten enthalten oder durch die oben als Substituenten des Phenylringes des Restes R₂ genannten Gruppen weitersubstituiert sein.

Der Rest der Formel -UR ist ein faserreaktiver Rest. Unter faserreaktiven Resten sind solche zu verstehen, die mit den Hydroxygruppen der Cellulose, den Amino-, Carboxy-, Hydroxy- und Thiolgruppen bei natürlichen Polyamiden, wie Wolle und Seide, oder mit den Amino- und eventuell Carboxygruppen von synthetischen Polyamiden unter Bildung kovalenter chemischer Bindungen zu reagieren vermögen. Der Rest der Formel -UR kann ein- bis viermal im Anthrachinonfarbstoff der Formel (1) enthalten sein. Die faserreaktiven Reste der Formel -UR können gleich oder verschieden sein, vorzugsweise sind die faserreaktiven Reste gleich. Die Zahl n ist bevorzugt 1 oder 2, insbesondere 1.

Als β-Halogenethyl kommt für Z insbesondere der β-Chlorethylrest und als β-Acyloxyethyl insbesondere der β-Acetoxyethylrest in Betracht. Der Alkylenrest alk ist vorzugsweise Methylen, Ethylen, Methylmethylen, Propylen oder Butylen. Der Substituent Y ist als C₁-C₄-Alkanoyloxyrest insbesondere Acetyloxy, Propionyloxy oder Butyryloxy, als C₁-C₅-Alkoxycarbonylrest insbesondere Methoxycarbonyl, Ethoxycarbonyl oder Propyloxycarbonyl und als Halogen insbesondere Fluor, Chlor oder Brom. Falls V ein C₁-C₄-Alkylrest ist, kann dieser Methyl, Ethyl, n-Propyl, Isopropyl, n-Butyl, Isobutyl, sec.-Butyl oder tert.-Butyl sein, wobei die genannten Alkylreste durch Methoxy, Ethoxy, Hydroxy oder Halogen, wie z.B. Fluor, Chlor oder Brom, substituiert sein können. Der Rest R₃ ist beispielsweise Methyl, Ethyl, n-Propyl, Isopropyl, n-Butyl, Isobutyl, sec.-Butyl, tert.-Butyl oder geradkettiges oder verzweigtes Pentyl oder Hexyl, oder vorzugsweise Wasserstoff. Die Polymethylenreste alk' sind vorzugsweise Ethylen, Propylen oder Butylen. Die Indizes m, p und q sind unabhängig voneinander vorzugsweise 2, 3 oder 4.

Bevorzugt sind Anthrachinonfarbstoffe der Formel (1), worin B gegebenenfalls durch C₁-C₄-Alkyl, C₁-C₄-Alkoxy, C₂-C₄-Alkanoylamino, Carboxy, Hydroxy, Sulfo oder Halogen, insbesondere durch Methyl, Methoxy oder Chlor, weitersubstituiertes Phenyl ist.

Der Rest R₁ ist bevorzugt Wasserstoff.

Die Anthrachinonfarbstoffe der Formel (1) enthalten bevorzugt im Phenylring des Restes R₂ eine Sulfogruppe. Vorzugsweise enthalten die Anthrachinonfarbstoffe der Formel (1) nur eine Sulfogruppe.

Weiterhin bevorzugt sind Anthrachinonfarbstoffe der Formel (1), worin R₂ ein gegebenenfalls im Phenylring durch C₁-C₄-Alkyl, C₁-C₄-Alkoxy, C₂-C₄-Alkanoylamino, Carboxy, Hydroxy, Sulfo oder Halogen, insbesondere durch Sulfo, substituierter Phenyl-C₁-C₈-alkyl- oder Phenylcyclohexylrest ist.

Besonders bevorzugt sind faserreaktive Anthrachinonfarbstoffe der Formel 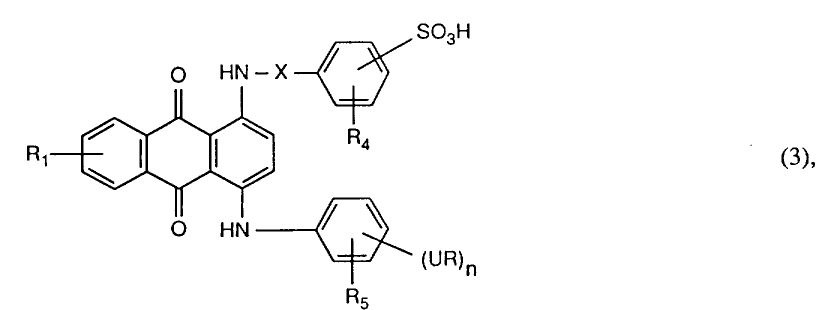 worin R₁ Wasserstoff oder Halogen ist, R₄ und R₅ unabhängig voneinander Wasserstoff, C₁-C₄-Alkyl, C₁-C₄-Alkoxy,C₂-C₄-Alkanoylamino, Carboxy, Hydroxy, Sulfo oder Halogen sind, X ein C₁-C₈-Alkylen- oder Cyclohexylenrest ist und U, R und n die oben angegebenen Bedeutungen und Bevorzugungen haben. Vorzugsweise ist R₄ Wasserstoff. R₅ ist bevorzugt Wasserstoff, Methyl, Methoxy oder Chlor.

R ist bevorzugt ein Rest der Formel (2a), (2c) oder (2d), insbesondere ein Rest der Formel (2a).

Bevorzugt ist U der Rest -CO-.

Für Z ist die Bedeutung als β-Sulfatoethyl, β-Thiosulfatoethyl, β-Phosphatoethyl oder Vinyl bevorzugt. Vorzugsweise ist Z der β-Sulfatoethyl- oder Vinylrest, insbesondere der β-Sulfatoethylrest.

Von besonderem Interesse sind Anthrachinonfarbstoffe, worin U der Rest -CO-, Z β-Sulfatoethyl, β-Thiosulfatoethyl, β-Phosphatoethyl oder Vinyl und n die Zahl 1 ist; vorzugsweise ist hierbei R ein Rest der Formel (2a).

Besonders wichtig sind Anthrachinonfarbstoffe der Formel (1), worin B gegebenenfalls durch C₁-C₄-Alkyl, C₁-C₄-Alkoxy, C₂-C₄-Alkanoylamino, Carboxy, Hydroxy, Sulfo oder Halogen, insbesondere durch Methyl, Methoxy oder Chlor, weitersubstituiertes Phenyl ist, R₂ ein gegebenenfalls im Phenylring durch C₁-C₄-Alkyl, C₁-C₄-Alkoxy, C₂-C₄-Alkanoylamino, Carboxy, Hydroxy, Sulfo oder Halogen, insbesondere durch Sulfo, substituierter Phenyl-C₁-C₈-alkyl- oder Phenylcyclohexylrest ist, U der Rest -CO-, Z β-Sulfatoethyl, β-Thiosulfatoethyl, β-Phosphatoethyl oder Vinyl und n die Zahl 1 ist; vorzugsweise ist hierbei R ein Rest der Formel (2a).

Ganz besonders wichtig sind Anthrachinonfarbstoffe der Formel (3), worin U der Rest -CO-, Z β-Sulfatoethyl, β-Thiosulfatoethyl, β-Phosphatoethyl oder Vinyl und n die Zahl 1 ist; vorzugsweise ist hierbei R ein Rest der Formel (2a).

Von ganz besonderer Bedeutung sind hierbei Farbstoffe, welche mindestens eine Sulfogruppe und mindestens eine Sulfatogruppe enthalten.

Gegenstand der Erfindung ist ferner ein Verfahren zur Herstellung der erfindungsgemässen faserreaktiven Anthrachinonfarbstoffe der Formel (1), welches dadurch gekennzeichnet ist, dass man eine Verbindung der Formel 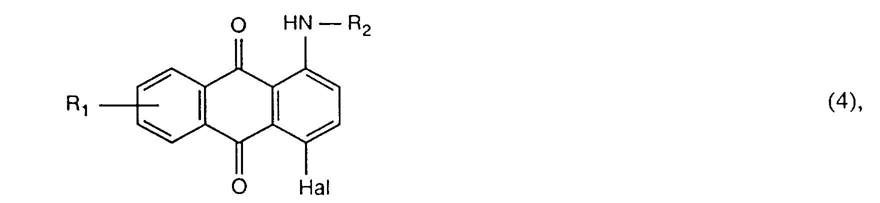 worin Hal Halogen bedeutet und R₁ und R₂ die unter Formel (1) angegebenen Bedeutungen haben, mit einem Amin der Formel

NH₂-B-(UR)ₙ (5),

worin B, U, R und n die unter Formel (1) angegebenen Bedeutungen haben, kondensiert und das Kondensationsprodukt gegebenenfalls anschliessend sulfiert,
oder eine Verbindung der Formel (4), worin Hal Halogen bedeutet und R₁ und R₂ die unter Formel (1) angegebenen Bedeutungen haben, mit einem Amin der Formel (5), worin B, U, R und n die unter Formel (1) angegebenen Bedeutungen haben und Z β-Hydroxyethyl bedeutet, kondensiert und das Kondensationsprodukt anschliessend sulfiert.

Die Verbindungen der Formel (4) und die Amine der Formel (5) sind bekannt oder können in Analogie zu bekannten Verbindungen hergestellt werden.

Die Verbindungen der Formel (4), worin R₁ nicht Wasserstoff bedeutet, liegen in der Regel als Isomerengemische vor, wobei sich die einzelnen Isomeren nur hinsichtlich der Stellung des Substituenten R₁ unterscheiden und R₁ entweder in 6- oder in 7-Stellung an den Anthrachinonkern gebunden ist. Geht man von solchen Isomerengemischen der Verbindungen der Formel (4) aus, so werden auch die entsprechenden Isomerengemische der Anthrachinonfarbstoffe der Formel (1) erhalten.

Die Kondensation der Verbindung der Formel (4) mit einem Amin der Formel (5) findet vorzugsweise im organischen Medium (z.B. Methyl- oder Ethylcellosolve, Dimethoxyethan, Butanol, Chlorbenzol oder Dichlorbenzol) bei einer Temperatur von z.B. 90 bis 150°C in Abhängigkeit von dem Siedepunkt des eingesetzten Lösungsmittels in an sich bekannter Weise in Gegenwart eines Katalysators, wie z.B. Kupferpulver oder einem Kupfersalz, wie Kupferchlorid, statt. Es ist auch möglich, das Amin selbst als Lösungsmittel zu verwenden.

Die Sulfierung erfolgt z.B. mit Oleum, welches 1 bis 10% freies SO₃ enthält, oder mit konzentrierter Schwefelsäure bei einer Temperatur von beispielsweise 0 bis 30°C.

Die Sulfierung dient zum einen der Einführung einer Sulfogruppe in den Anthrachinonfarbstoff und zum anderen, falls Z eine β-Hydroxyethylgruppe ist, der Überführung der β-Hydroxyethylgruppe in die β-Sulfatoethylgruppe.

Zur Herstellung von Anthrachinonfarbstoffen, worin der Rest Z eine β-Sulfatoethylgruppe ist, erfolgt die Kondensation vorzugsweise unter Verwendung eines Amins der Formel (5), worin Z β-Hydroxyethyl bedeutet, und anschliessender Sulfierung des Kondensationsproduktes, wobei die β-Hydroxyethylgruppe in die β-Sulfatoethylgruppe überführt wird und zusätzlich eine Sulfogruppe in den Anthrachinonfarbstoff eingeführt wird.

Bevorzugt geht man von Verbindungen der Formel (4) aus, worin Hal Brom bedeutet.

Bevorzugte Ausführungsformen des erfindungsgemässen Verfahrens sind dadurch gekennzeichnet, dass man
- ein Amin der Formel (5) verwendet, worin B gegebenenfalls durch C₁-C₄-Alkyl, C₁-C₄-Alkoxy, C₂-C₄-Alkanoylamino, Carboxy, Hydroxy, Sulfo oder Halogen, insbesondere durch Methyl, Methoxy oder Chlor, weitersubstituiertes Phenyl ist;
- eine Verbindung der Formel (4) verwendet, worin R₁ Wasserstoff oder Halogen, insbesondere Wasserstoff, ist;
- eine Verbindung der Formel (4) verwendet, worin R₂ ein gegebenenfalls im Phenylring durch C₁-C₄-Alkyl, C₁-C₄-Alkoxy, C₂-C₄-Alkanoylamino, Carboxy, Hydroxy, Sulfo oder Halogen, insbesondere durch Sulfo, substituierter Phenyl-C₁-C₈-alkyl- oder Phenylcyclohexylrest ist;
- ein Amin der Formel (5) verwendet, worin U der Rest -CO- ist;
- ein Amin der Formel (5) verwendet, worin R ein Rest der Formel (2a), (2c) oder (2d), insbesondere ein Rest der Formel (2a), ist;
- ein Amin der Formel (5) verwendet, worin R ein Rest der Formel (2a), (2c) oder (2d), insbesondere ein Rest der Formel (2a), ist und Z β-Hydroxyethyl bedeutet, und man anschliessend das erhaltene Kondensationsprodukt sulfiert.

Eine besonders bevorzugte Ausführungsform des erfindungsgemässen Verfahrens ist dadurch gekennzeichnet, dass man eine Verbindung der Formel 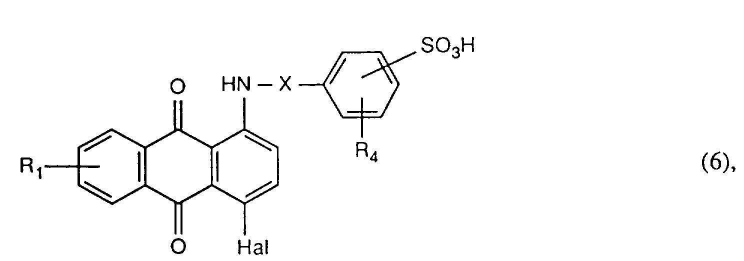 worin R₁, R₄ und X die unter Formel (3) angegebenen Bedeutungen haben und Hal Halogen bedeutet, mit einem Amin der Formel 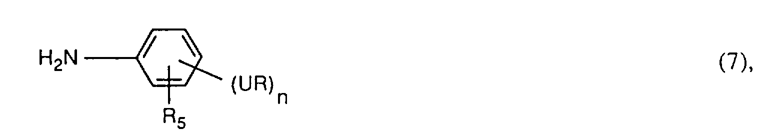 worin R₅, U, R und n die unter Formel (3) angegebenen Bedeutungen haben, kondensiert, oder eine Verbindung der Formel 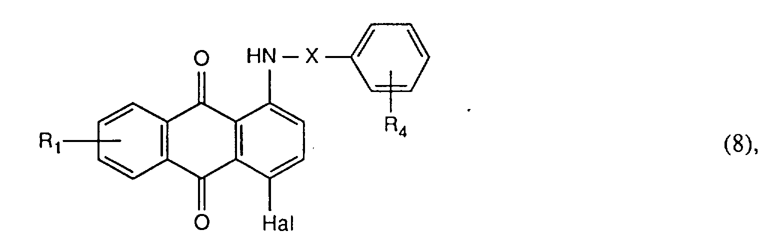 worin R₁, R₄ und X die unter Formel (3) angegebenen Bedeutungen haben und Hal Halogen bedeutet, mit einem Amin der Formel (7), worin R₅, U, R und n die unter Formel (3) angegebenen Bedeutungen haben und Z β-Hydroxyethyl bedeutet, kondensiert und anschliessend das Kondensationsprodukt sulfiert.

Ein weiterer Gegenstand der Erfindung sind Mischungen von faserreaktiven Anthrachinonfarbstoffen, welche mindestens zwei faserreaktive Anthrachinonfarbstoffe der Formel (1) enthalten. Für die Mischungskomponenten gelten hierbei die oben für die Anthrachinonfarbstoffe der Formel (1) angegebenen Bedeutungen und Bevorzugungen.

Bevorzugt sind Isomerenmischungen der Anthrachinonfarbstoffe der Formel (1), wobei sich die einzelnen Isomeren nur hinsichtlich der Stellung des Substituenten R₁ unterscheiden und R₁ entweder in 6- oder in 7-Stellung an den Anthrachinonkern gebunden ist.

Die erfindungsgemässen Anthrachinonfarbstoffe der Formel (1) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Anthrachinonfarbstoffe der Formel (1) eignen sich zum Färben oder Bedrucken der verschiedensten Fasermaterialien, wie hydroxylgruppenhaltige oder stickstoffhaltige Fasermaterialien. Solche Fasermaterialien sind beispielsweise die natürlichen Cellulosefasern, wie Baumwolle, Leinen oder Hanf, sowie Zellstoff und regenerierte Cellulose. Insbesondere eigenen sich die erfindungsgemässen Anthrachinonfarbstoffe zum Färben oder Bedrucken von natürlichen Polyamidfasermaterialien, wie z.B. Wolle, wie insbesondere von synthetischen Polyamidfasermaterialien, wie z.B. Polyamid 6 oder Polyamid 6.6, und sind geeignet zum Färben oder Bedrucken von Woll- und synthetischen Polyamid-Mischgeweben oder -Garnen. Besonders geeignet sind die Anthrachinonfarbstoffe der Formel (1) zum Färben oder Bedrucken von natürlichen Polyamidfasermaterialien, insbesondere von Wolle.

Das genannte Textilmaterial kann dabei in den verschiedensten Verarbeitungsformen vorliegen, wie z.B. als Faser, Garn, Gewebe oder Gewirke.

Die erfindungsgemässen Anthrachinonfarbstoffe der Formel (1) eignen sich für die üblichen Färbe- bzw. Druckverfahren und lassen sich auf verschiedenste Weise auf das Fasermaterial applizieren und fixieren, insbesondere in Form von wässrigen Farbstofflösungen oder -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die erfindungsgemässen Anthrachinonfarbstoffe sind ebenfalls für das sogenannte Kaltverweilverfahren geeignet, wonach der Farbstoff zusammen mit dem Alkali auf dem Foulard aufgebracht wird und danach durch mehrstündiges Lagern bei Raumtemperatur fixiert wird.

Das Färben von natürlichen und synthetischen Polyamidfasermaterialien, insbesondere Wolle, erfolgt vorzugsweise nach dem Ausziehverfahren, bei einem pH-Wert von ca. 3 bis 7, insbesondere 3 bis 5, und bei einer Temperatur von beispielsweise 70 bis 110°C, insbesondere 90 bis 100°C.

Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Anthrachinonfarbstoffe der Formel (1) ergeben egale Färbungen mit guten Allgemeinechtheiten, insbesondere guter Wasch-, Reib-, Nass-, Nassreib- und Lichtechtheit. Ferner zeichnen sich die erfindungsgemässen Anthrachinonfarbstoffe durch gleichmässigen Farbaufbau, gutes Aufziehverhalten, hohe Fixiergrade sowie durch gute Kombinierbarkeit mit anderen Farbstoffen aus. Weiterhin kann für die erfindungsgemässen Anthrachinonfarbstoffe der Formel (1) auf die sonst übliche Nachbehandlung der Färbungen oder Drucke mit sogenannten Fixiermitteln verzichtet werden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Man rührt ein Gemisch bestehend aus 24 Teilen 1-Chloranthrachinon und 35 Teilen Phenyl-sec-butylamin 15 Stunden bei einer Temperatur von 155°. Das noch vorhandene Phenyl-sec-butylamin wird mittels Wasserdampf abdestilliert und das Reaktionsprodukt der Formel 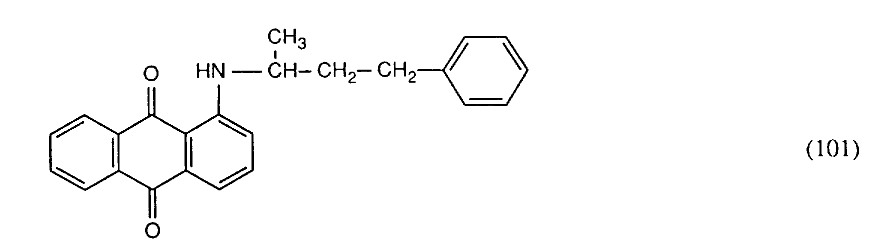 isoliert.

17 Teile des so erhaltenen Produktes werden in 75 Teilen n-Butanol bei einer Temperatur von 35° verrührt und nach Zusatz von 8 Teilen Brom während 15 Stunden bei einer Temperatur von 40 bis 50° gehalten. Das Lösungsmittel wird unter Vakuum eingeengt und das Zwischenprodukt der Formel 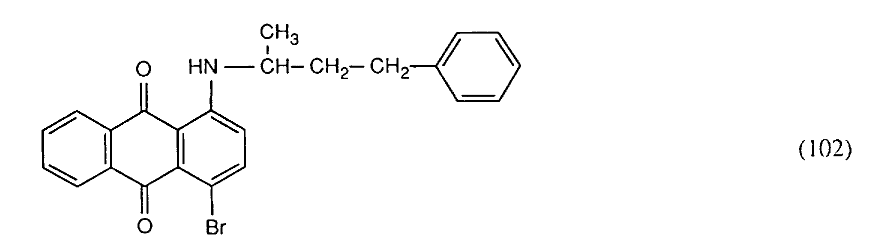 durch Filtration isoliert.

Beispiele 2 bis 11: Verfährt man wie in Beispiel 1 angegeben, verwendet jedoch anstelle von 35 Teilen Phenyl-sec-butylamin eine äquimolare Menge eines Amins der Formel NH₂-W₁, so erhält man analoge Zwischenprodukte der Formel 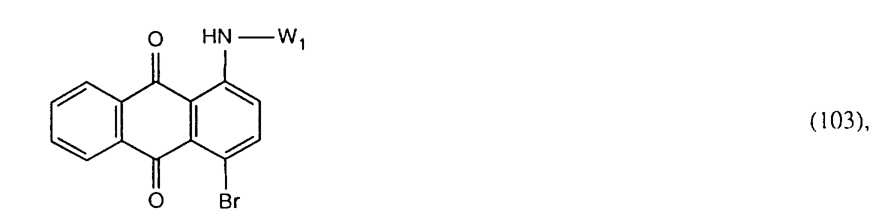 wobei W₁ im Amin der Formel NH₂-W₁ und in dem Zwischenprodukt der Formel (103) die in Tabelle 1 in Spalte 2 angegebenen Bedeutungen hat.

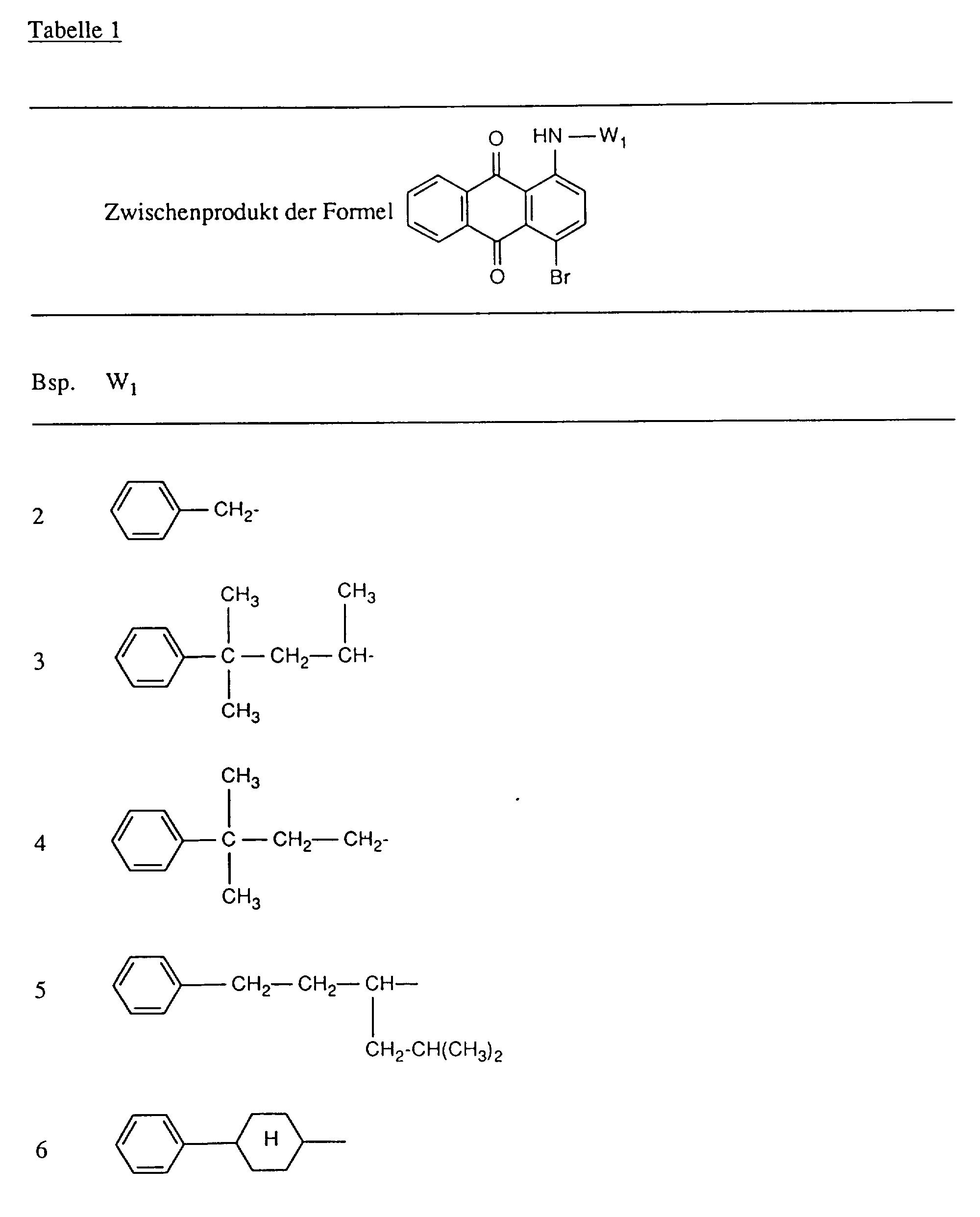

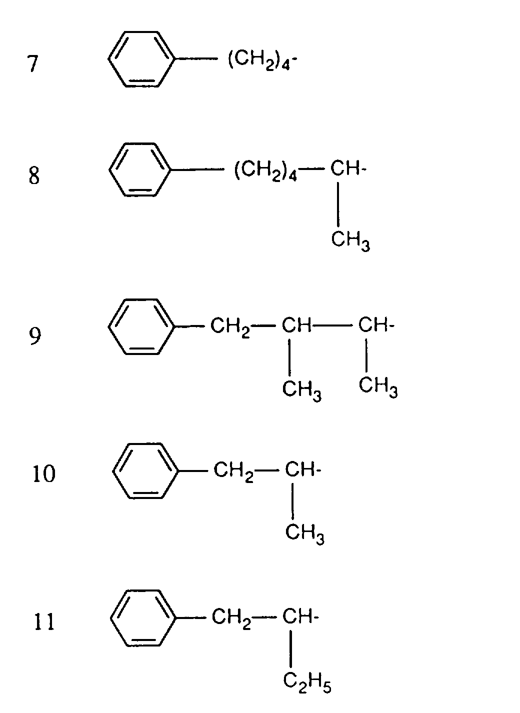

Beispiel 12: 17 Teile des gemäss Beispiel 1 hergestellten Zwischenproduktes der Formel (102), 15 Teile 3-Aminobenzoesäure-N-β-(β'-hydroxyethylsulfonyl)-ethylamid, 5 Teile Kaliumacetat und 0,2 Teile Kupferchlorid werden in 50 Teile Ethylcellosolve gegeben und 10 Stunden unter Rühren bei einer Temperatur von 100 bis 105° erhitzt. Anschliessend lässt man das Gemisch erkalten und filtriert das ausgeschiedene Produkt der Formel 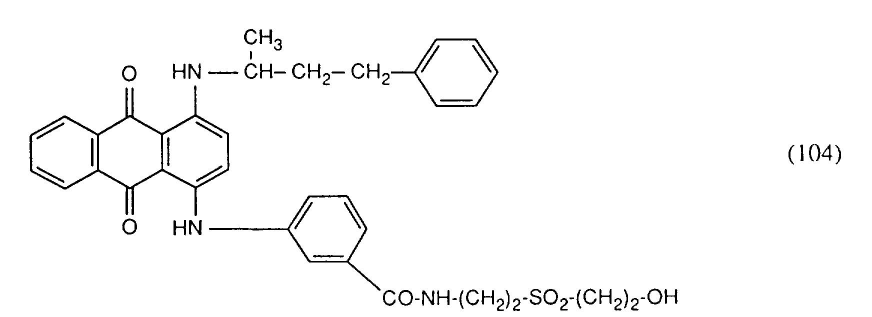 ab.

Die gut getrocknete Verbindung der Formel (104) wird zur Herstellung des sulfierten Schwefelsäureesters in die dreifache Gewichtsmenge Schwefelsäure-Monohydrat eingetragen und bis zur vollständigen Lösung gerührt. Dann giesst man die erhaltene Lösung auf Eis, wobei das sulfierte Produkt ausfällt. Es wird abfiltriert, sodann in einer Mischung aus Eis und Wasser angerührt und nach dem Neutralisieren mit Natriumcarbonat durch Einstreuen von Natriumchlorid ausgesalzen, abfiltriert und getrocknet. Man erhält einen Reaktivfarbstoff, der in Form der freien Säure der Verbindung der Formel 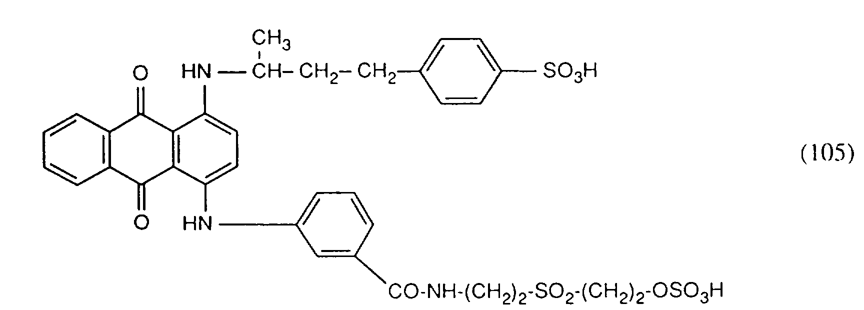 entspricht und Wolle in einem grünstichig blauen Farbton färbt. Die Fixiergrade sind hoch.

Wird der Farbstoff der Formel (105) mit einer wässrigen Natriumhydroxidlösung bei einem pH-Wert von ca. 9 behandelt, so erhält man diesen Farbstoff in der entsprechenden Vinylform.

Beispiele 13 bis 22: Verfährt man wie in Beispiel 12 angegeben, verwendet jedoch anstelle von 17 Teilen des gemäss Beispiel 1 erhaltenen Zwischenproduktes der Formel (102) eine äquimolare Menge eines der gemäss den Beispielen 2 bis 11 erhaltenen Zwischenprodukte, so erhält man analoge Reaktivfarbstoffe, welche in Form der freien Säure der Verbindung der Formel 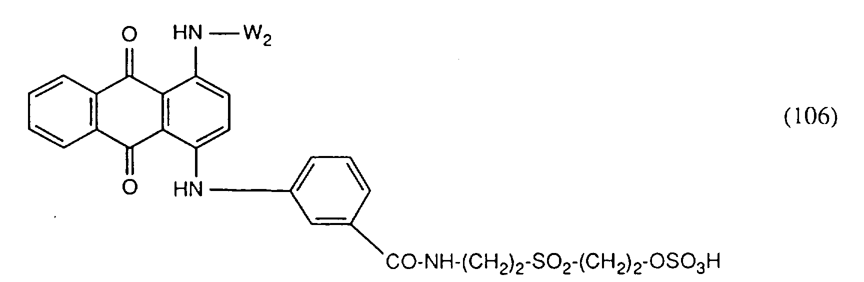 entsprechen, wobei W₂ die in Tabelle 2 in Spalte 2 angegebenen Bedeutungen hat. Die in Tabelle 2 angegebenen Reaktivfarbstoffe färben Wolle in blauen Farbtönen.

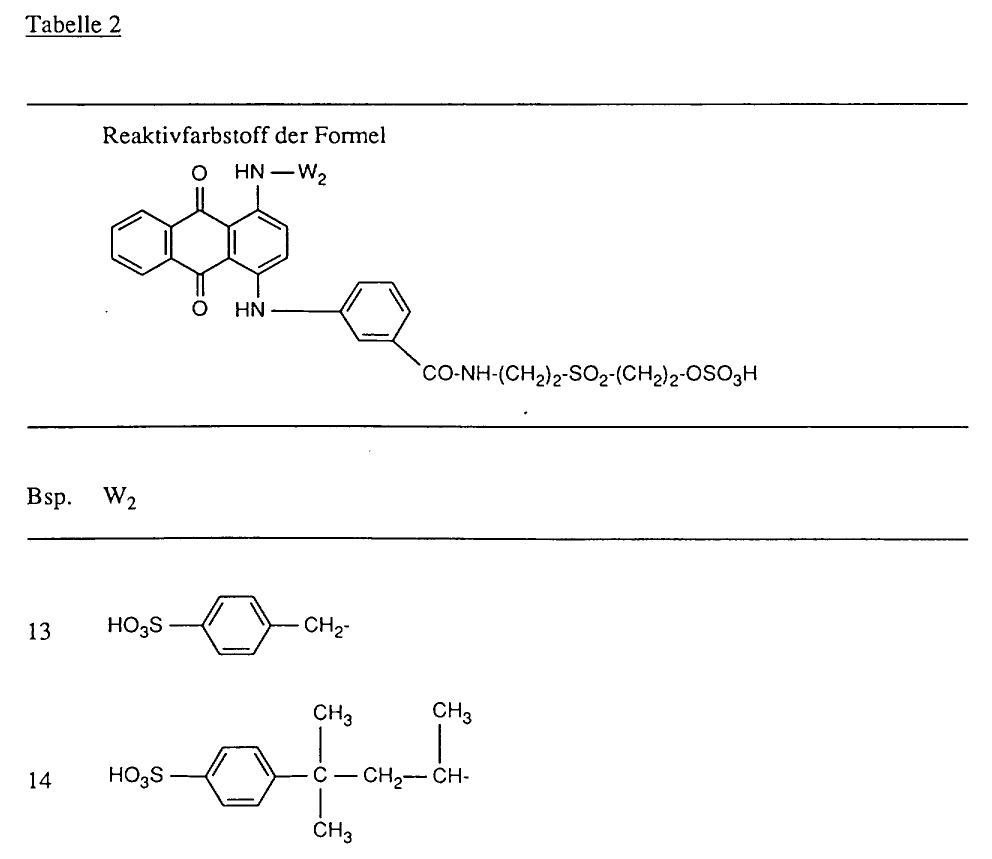

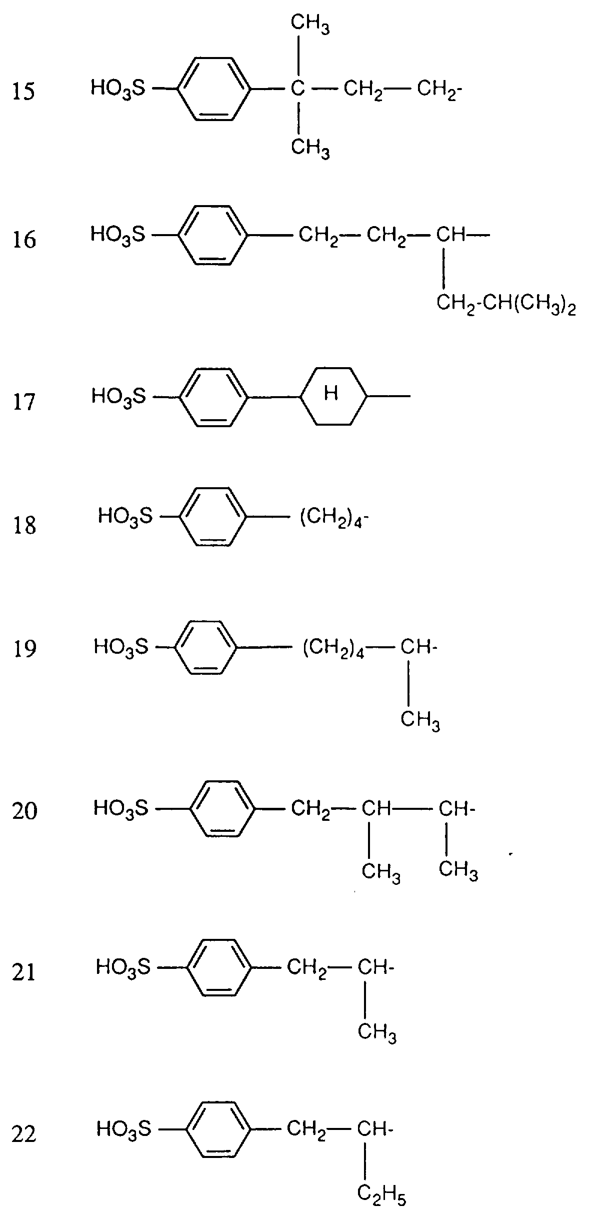

Beispiele 23 bis 30: Verfährt man wie in Beispiel 12 angegeben, verwendet jedoch anstelle von 15 Teilen 3-Aminobenzoesäure-N-β-(β'-hydroxyethylsulfonyl)-ethylamid eine äquimolare Menge einer Verbindung der Formel 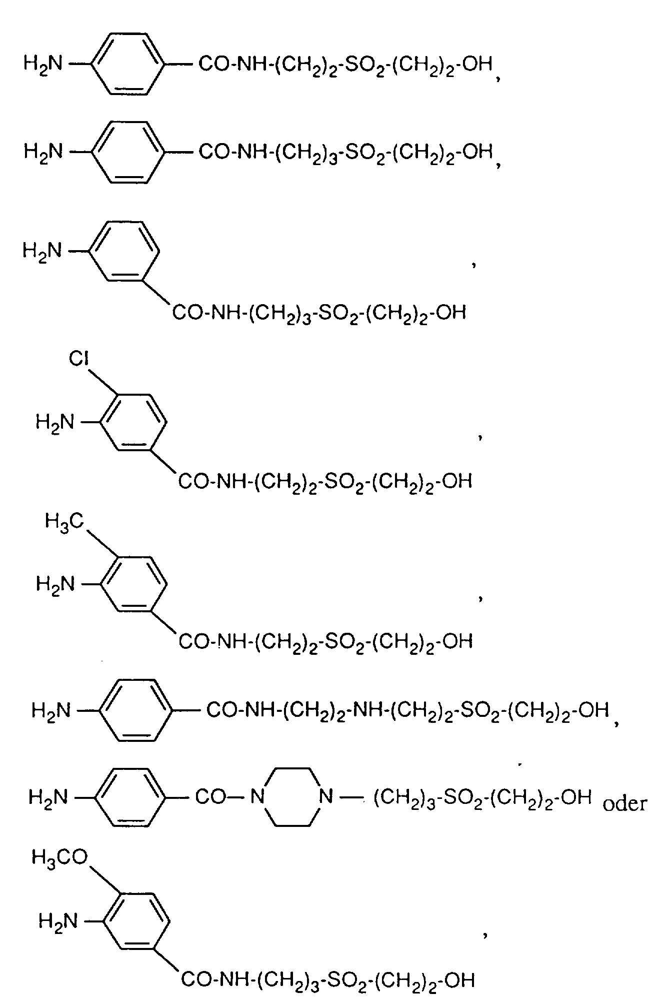 so erhält man analoge Reaktivfarbstoffe, welche in Form der freien Säure der Verbindung der Formel 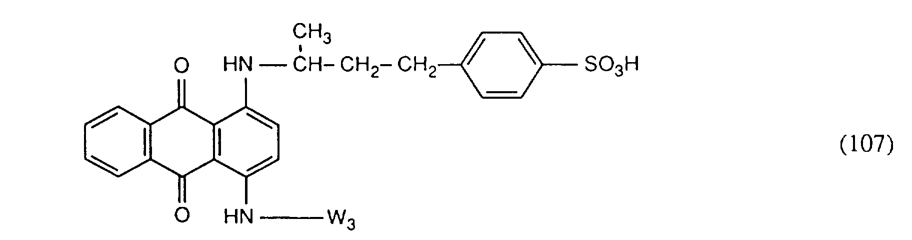 entsprechen, wobei W₃ die in Tabelle 3 in Spalte 2 angegebenen Bedeutungen hat. Die in Tabelle 3 angegebenen Reaktivfarbstoffe färben Wolle in blauen Farbtönen.

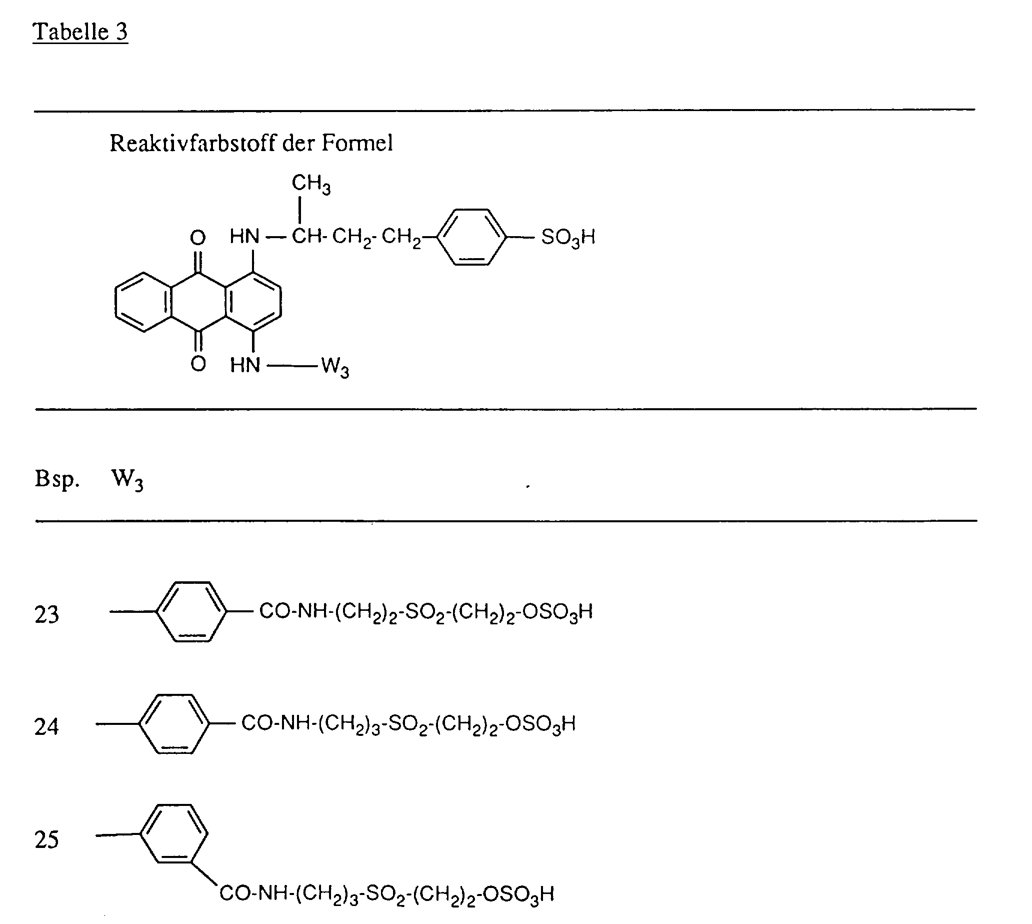

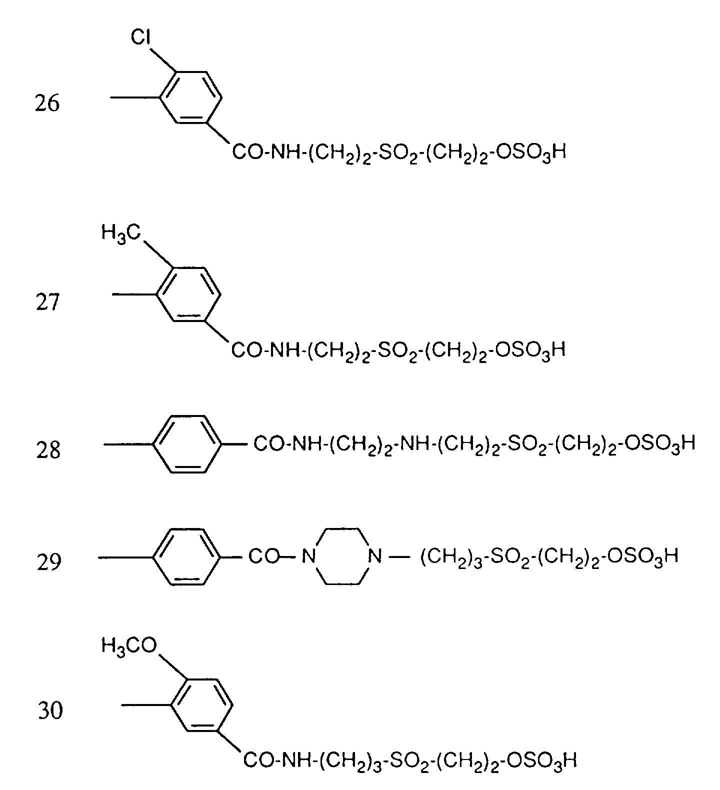

Verfährt man wie in Beispiel 23, 24, 25, 26, 27, 28, 29 oder 30 angegeben, verwendet jedoch anstelle von 17 Teilen des gemäss Beispiel 1 erhaltenen Zwischenproduktes der Formel (102) eine äquimolare Menge eines der gemäss den Beispielen 2 bis 11 erhaltenen Zwischenprodukte, so erhält man analoge Reaktivfarbstoffe, welche Wolle in blauen Farbtönen färben.

Färbebeispiel: Man bereitet ein Färbebad aus 2000 Teilen Wasser, 5 Teilen Natriumsulfat, 4 Teilen Natriumacetat, einem Teil eines Egalisierhilfsmittels (basierend auf dem Kondensationsprodukt aus einem höheren aliphatischen Amin und Ethylenoxid) und 1,9 Teilen des Farbstoffes gemäss Beispiel 12 und stellt den pH des Färbebades durch Zugabe von Essigsäure auf einen Wert von 5,5. In das so erhaltene Färbebad geht man mit 100 Teilen Wollgewebe ein, erhitzt innerhalb von 50 Minuten auf ca. 100° und färbt eine Stunde bei dieser Temperatur. Nach Spülen und Trocknen erhält man ein in einem grünstichig blauen Farbton gefärbtes Wollgewebe, welches sehr gute Nassechtheiten aufweist.

## Patentansprüche

1. Faserreaktive Anthrachinonfarbstoffe der Formel 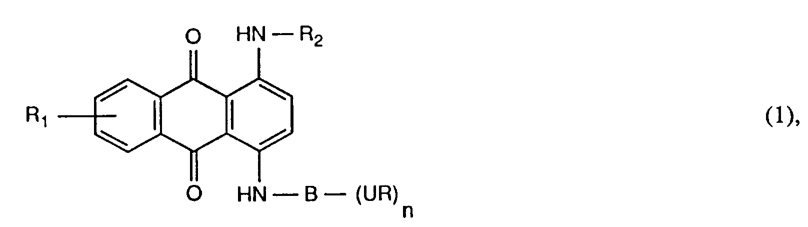
worin
R₁ Wasserstoff oder Halogen,
R₂ ein gegebenenfalls im Phenylring durch C₁-C₄-Alkyl, C₁-C₄-Alkoxy, C₂-C₄-Alkanoylamino, Carboxy, Hydroxy, Sulfo oder Halogen substituierter Phenyl-C₁-C₁₂-alkyl- oder Phenyl-C₅-C₇-cycloalkylrest ist, wobei der Cycloalkylrest durch C₁-C₄-Alkyl weitersubstituiert sein kann,
B gegebenenfalls durch C₁-C₄-Alkyl, C₁-C₄-Alkoxy, C₂-C₄-Alkanoylamino, Carboxy, Hydroxy, Sulfo oder Halogen weitersubstituiertes Phenyl ist,
U der Rest -CO- oder -SO₂-,
n die Zahl 1, 2, 3 oder 4 und
R ein Rest der Formel 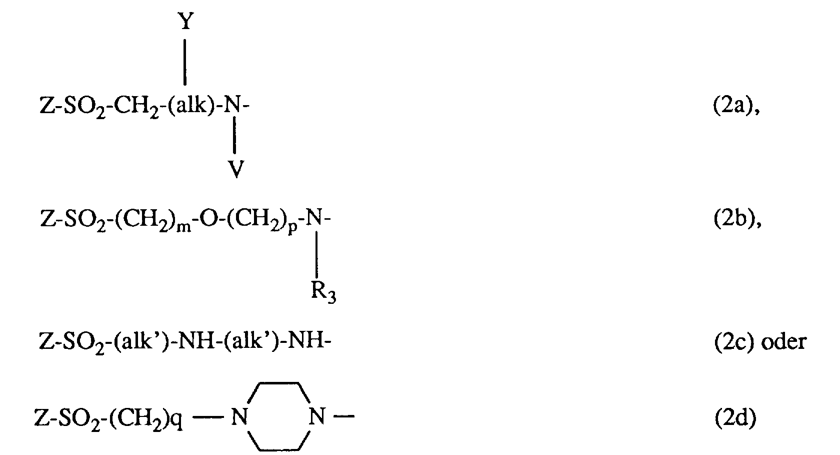 ist, wobei Z β-Sulfatoethyl, β-Thiosulfatoethyl, β-Phosphatoethyl, β-Acyloxyethyl, β-Halogenethyl oder Vinyl ist,
alk einen Alkylenrest mit 1 bis 7 Kohlenstoffatomen darstellt,
Y Wasserstoff, Halogen, Hydroxy, Cyano, C₁-C₄-Alkanoyloxy, C₁-C₅-Alkoxycarbonyl, Carbamoyl oder einen Rest -SO₂-Z bedeutet,
V Wasserstoff, gegebenenfalls durch C₁-C₂-Alkoxy, Halogen oder Hydroxy substituiertes C₁-C₄-Alkyl oder ein Rest der Formel 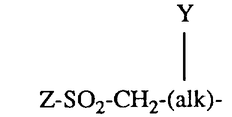 ist, worin Z, alk und Y die angegebenen Bedeutungen haben,
R₃ Wasserstoff oder C₁-C₈-Alkyl ist,
alk' unabhängig voneinander Polymethylenreste mit 2 bis 6 Kohlenstoffatomen bedeuten und
m, p und q unabhängig voneinander die Zahl 1, 2, 3, 4, 5 oder 6 sind.

2. Faserreaktive Anthrachinonfarbstoffe gemäss Anspruch 1, worin der Rest R₂ im Phenylring eine Sulfogruppe enthält.

3. Faserreaktive Anthrachinonfarbstoffe gemäss Anspruch 1, der Formel 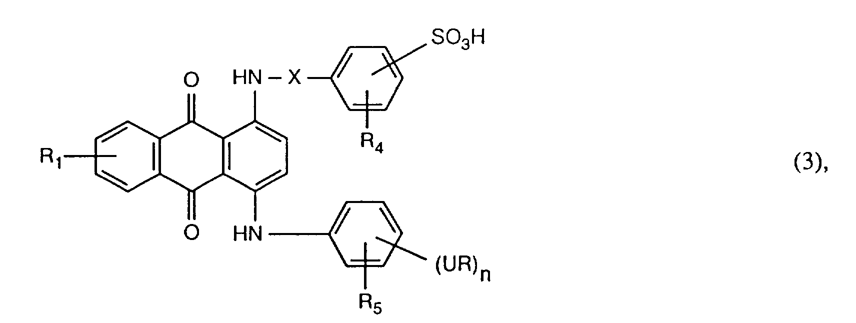 worin R₁ Wasserstoff oder Halogen ist, R₄ und R₅ unabhängig voneinander Wasserstoff, C₁-C₄-Alkyl, C₁-C₄-Alkoxy, C₂-C₄-Alkanoylamino, Carboxy, Hydroxy, Sulfo oder Halogen sind, X ein C₁-C₈-Alkylen- oder Cyclohexylenrest ist und U, R und n die in Anspruch 1 angegebenen Bedeutungen haben.

4. Faserreaktive Anthrachinonfarbstoffe gemäss einem der Ansprüche 1 bis 3, worin n die Zahl 1 ist.

5. Faserreaktive Anthrachinonfarbstoffe gemäss einem der Ansprüche 1 bis 4, worin U der Rest -CO- ist.

6. Faserreaktive Anthrachinonfarbstoffe gemäss einem der Ansprüche 1 bis 5, worin Z β-Sulfatoethyl, β-Thiosulfatoethyl, β-Phosphatoethyl oder Vinyl ist.

7. Faserreaktive Anthrachinonfarbstoffe gemäss einem der Ansprüche 1 bis 3, worin U der Rest -CO-, Z β-Sulfatoethyl, β-Thiosulfatoethyl, β-Phosphatoethyl oder Vinyl und n die Zahl 1 ist.

8. Mischungen von faserreaktiven Anthrachinonfarbstoffen, dadurch gekennzeichnet, dass sie mindestens zwei faserreaktive Anthrachinonfarbstoffe der Formel (1) gemäss Anspruch 1 enthalten.

9. Verfahren zur Herstellung von faserreaktiven Anthrachinonfarbstoffen gemäss Anspruch 1, dadurch gekennzeichnet, dass man eine Verbindung der Formel 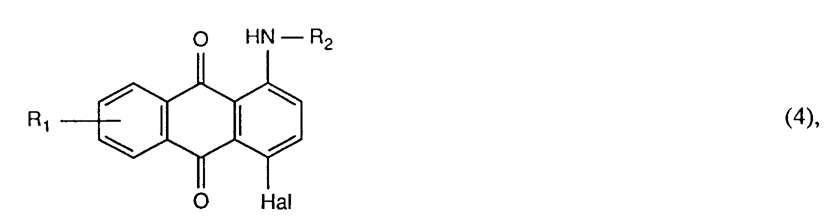 worin Hal Halogen bedeutet und R₁ und R₂ die in Anspruch 1 angegebenen Bedeutungen haben, mit einem Amin der Formel
NH₂-B-(UR)ₙ (5),
worin B, U, R und n die in Anspruch 1 angegebenen Bedeutungen haben, kondensiert und das Kondensationsprodukt gegebenenfalls anschliessend sulfiert,
oder eine Verbindung der Formel (4), worin Hal Halogen bedeutet und R₁ und R₂ die in Anspruch 1 angegebenen Bedeutungen haben, mit einem Amin der Formel (5), worin B, U, R und n die in Anspruch 1 angegebenen Bedeutungen haben und Z β-Hydroxyethyl bedeutet, kondensiert und das Kondensationsprodukt anschliessend sulfiert.

10. Verwendung der faserreaktiven Anthrachinonfarbstoffe gemäss den Ansprüchen 1 bis 7 bzw. der Mischungen faserreaktiver Anthrachinonfarbstoffe gemäss Anspruch 8 zum Färben oder Bedrucken von stickstoffhaltigen oder hydroxylgruppenhaltigen Fasermaterialien.

11. Verwendung gemäss Anspruch 10 zum Färben oder Bedrucken von natürlichen oder synthetischen Polyamidfasermaterialien, insbesondere Wolle.

## Claims

1. A fibre-reactive anthraquinone dye of formula 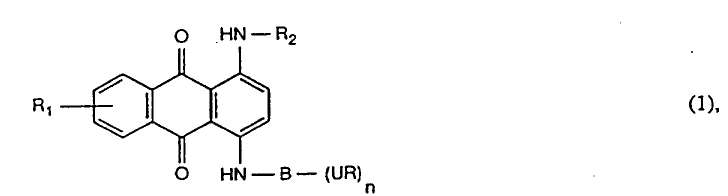 wherein R₁ is hydrogen or halogen, R is a phenyl-C₁-C₁₂alkyl or phenyl-C₅-C₇cycloalkyl radical which is unsubstituted or substituted in the phenyl ring by C₁-C₄alkyl, C₁-C₄alkoxy, C₂-C₄alkanoylamino, carboxy, hydroxy, sulfo or halogen, and where the cycloalkyl radical may be further substituted by C₁-C₄alkyl, B is phenyl which may be further substituted by C₁-C₄alkyl, C₁-C₄alkoxy, C₂-C₄alkanoylamino, carboxy, hydroxy, sulfo or halogen, U is the -CO- or -SO₂- radical, n is 1, 2, 3 or 4 and R is a radical of formula 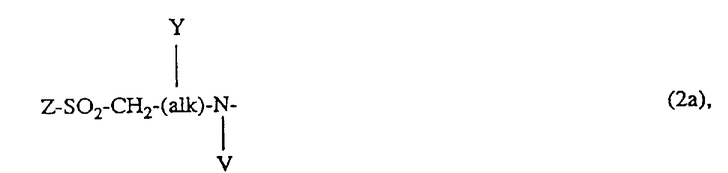 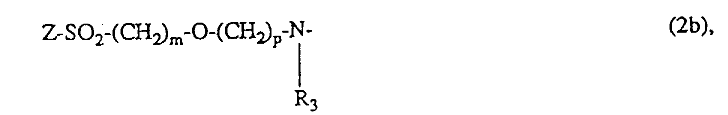 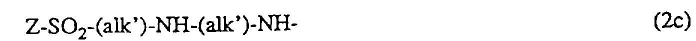 or 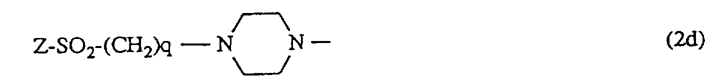
wherein Z is β-sulfatoethyl, β-thiosulfatoethyl, β-phosphatoethyl, β-acyloxyethyl, β-haloethyl or vinyl,
alk is an alkylene radical of 1 to 7 carbon atoms,
Y is hydrogen, halogen, hydroxy, cyano, C₁-C₄alkanoyloxy,
C₁-C₅alkoxycarbonyl, carbamoyl or a radical -SO₂-Z,
V is hydrogen, C₁-C₄alkyl which is unsubstituted or substituted by C₁-C₂alkoxy, halogen or hydroxy, or is a radical of formula 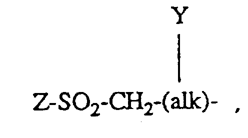 wherein Z, alk and Y have the given meanings,
R₃ is hydrogen or C₁-C₈alkyl,
alk' independently at each occurrence is a polymethylene radical of 2 to 6 carbon atoms and m, p and q are each independently of one another 1, 2, 3, 4, 5 or 6.

2. A fibre-reactive anthraquinone dye according to claim 1, where the radical R₂ in the phenyl ring contains a sulfo group.

3. A fibre-reactive anthraquinone dye according to claim 1 of formula 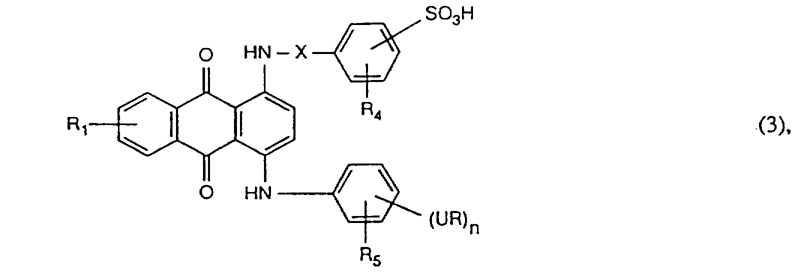 wherein R₁ is hydrogen or halogen, R₄ and R₅ are each independently of one another hydrogen, C₁-C₄alkyl, C₁-C₄alkoxy, C₂-C₄alkanoylamino, carboxy, hydroxy, sulfo or halogen, X is a C₁-C₈alkylene or cyclohexylene radical, and U, R and n are as defined in claim 1.

4. A fibre-reactive anthraquinone dye according to any one of claims 1 to 3, wherein n is 1.

5. A fibre-reactive anthraquinone dye according to any one of claims 1 to 4, wherein U is the -CO- radical.

6. A fibre-reactive anthraquinone dye according to any one of claims 1 to 5, wherein Z is β-sulfatoethyl, β-thiosulfatoethyl, β-phosphatoethyl or vinyl.

7. A fibre-reactive anthraquinone dye according to any one of claims 1 to 3, wherein U is the -CO- radical, Z is β-sulfatoethyl, β-thiosulfatoethyl, β-phosphatoethyl or vinyl, and n is 1.

8. A mixture of fibre-reactive anthraquinone dyes which contains at least two fibre-reactive anthraquinone dyes of formula (1) according to claim 1.

9. A process for the preparation of a fibre-reactive anthraquinone dye according to claim 1, which comprises condensing a compound of formula 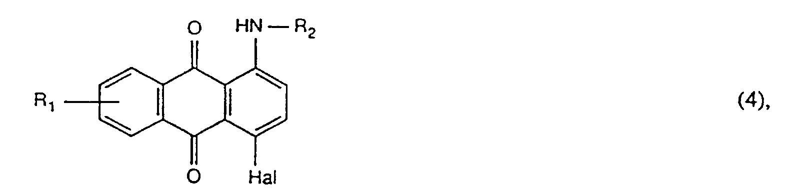 wherein Hal is halogen and R₁ and R₂ are as defined in claim 1, with an amine of formula
NH₂-B- (UR)ₙ (5),
wherein B, U, R and n are as defined in claim 1, and subsequently, if desired, sulfonating the condensation product,
or condensing a compound of formula (4), wherein Hal is halogen and R₁ and R₂ are as defined in claim 1, with an amine of formula (5), wherein B, U, R and n are as defined in claim 1, and Z is β-hydroxyethyl, and subsequently sulfonating the condensation product.

10. Use of a fibre-reactive anthraquinone dye according to any one of claims 1 to 7 or of a mixture of fibre-reactive anthraquinone dyes according to claim 8 for dyeing or printing nitrogen-containing or hydroxyl group-containing fibre materials.

11. Use according to claim 10 for dyeing or printing natural or synthetic polyamide fibre materials, especially wool.

## Revendications

1. Colorants anthraquinoniques réactifs vis-à-vis des fibres qui répondent à la formule 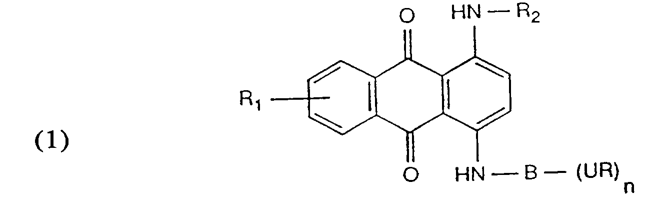 dans laquelle
R₁ représente un atome d'hydrogène ou d'halogène,
R₂ représente un résidu phényl(alkyle en C₁₋₁₂) ou phényl(cycloalkyle en C₅₋₇) dont le cycle phényle peut être substitué par un résidu alkyle en C₁₋₄, alcoxy en C₁₋₄, alcanoylamino en C₂₋₄, carboxy, hydroxy, sulfo ou un atome d'halogène, le résidu cycloalkyle pouvant à son tour être substitué par un groupe alkyle en C₁₋₄.
B représente un noyau phényle pouvant être substitué par un résidu alkyle en C₁₋₄, alcoxy en C₁₋₄, alcanoylamino en C₂₋₄, carboxy, hydroxy, sulfo ou un atome d'halogène,
U est le résidu -CO- ou -SO₂-, n vaut 1, 2, 3 ou 4 et
R représente un résidu de formule 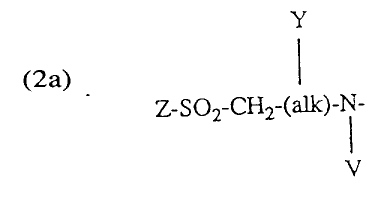 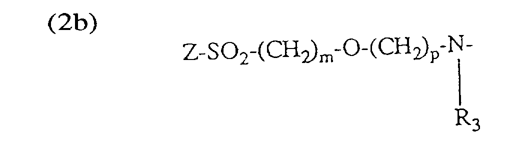
(2c) Z-SO₂-(alk')-NH-(alk')-NH- 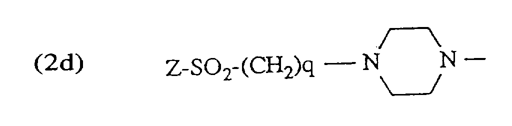
Z représentant un groupe β-sulfatoéthyle, β-thiosulfatoéthyle, β-phos-phatoéthyle, β-acyloxyéthyle, β-halogénoéthyle ou vinyle,
alk représente un radical alkylène comportant de 1 à 7 atomes de carbone,
Y représente un atome d'hydrogène ou d'halogène, un groupe hydroxy, cyano, alcanoyloxy en C₁₋₄, (alcoxy en C₁₋₅)-carbonyle, carbamoyle ou un résidu -SO₂-Z,
V représente un atome d'hydrogène, un groupe alkyle en C₁₋₄ pouvant être substitué par un résidu alcoxy en C₁₋₂, halogéno ou hydroxy, ou un résidu de formule 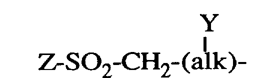
où Z, alk et Y ont la signification indiquée ci-dessus, R₃ représente un atome d'hydrogène ou un groupe alkyle en C₁₋₈, chaque alk' représente indépendamment l'un de l'autre un résidu polyméthylène comportant de 2 à 6 atomes de carbone, et m, p et q sont indépendamment l'un de l'autre égaux à 1, 2, 3, 4, 5 ou 6.

2. Colorants anthraquinoniques réactifs vis-à-vis des fibres conformes à la revendication 1 dans lesquels R₂ porte un substituant sulfo sur le noyau phényle.

3. Colorants anthraquinoniques réactifs vis-à-vis des fibres conformes à la revendication 1 qui correspondent à la formule 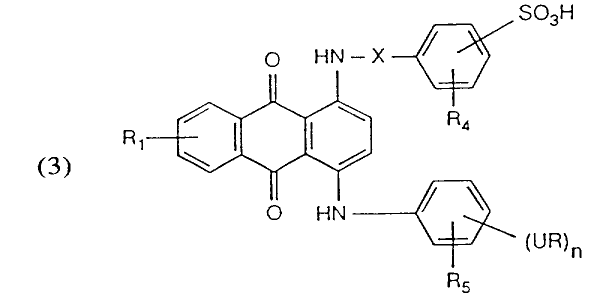 dans laquelle R₁ représente un atome d'hydrogène ou d'halogène, R₄ et R₅ représentent indépendamment l'un de l'autre un atome d'hydrogène, un groupe alkyle en C₁₋₄, alcoxy en C₁₋₄, alcanoylamino en C₂₋₄, carboxy, hydroxy, sulfo ou halogéno, X est un résidu alkyléne en C₁₋₈ ou cyclohexy-lène et pour U, R et n valent les significations et préférences indiquées dans la revendication 1.

4. Colorants anthraquinoniques réactifs vis-à-vis des fibres conformes à une des revendications 1 à 3 dans lesquels n vaut 1.

5. Colorants anthraquinoniques réactifs vis-à-vis des fibres conformes à une des revendications 1 à 4 dans lesquels U représente un résidu -CO-.

6. Colorants anthraquinoniques réactifs vis-à-vis des fibres conformes à une des revendications 1 à 5 dans lesquels Z représente un résidu β-sulfatoéthyle, β-thiosulfatoéthyle, β-phosphatoéthyle ou vinyle.

7. Colorants anthraquinoniques réactifs vis-à-vis des fibres conformes à une des revendications 1 à 3 dans lesquels U représente le résidu -CO-, Z représente un résidu β-sulfatoéthyle, β-thiosulfatoéthyle, β-phosphatoéthyle ou vinyle et n vaut 1.

8. Mélanges de colorants anthraquinoniques réactifs vis-à-vis des fibres caractérisés en ce qu'ils contiennent au moins deux colorants anthraquinoniques réactifs vis-à-vis des fibres de formule (1) conformes à la revendication 1.

9. Procédé pour la préparation de colorants anthraquinoniques réactifs vis-à-vis des fibres conformes à la revendication 1, caractérisé en ce que l'on effectue la condensation d'un composé de formule 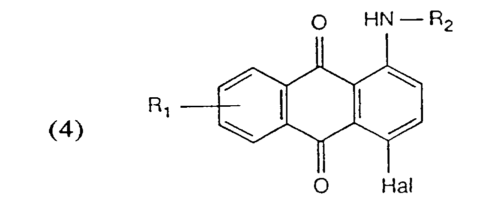 dans laquelle Hal représente un atome d'halogène et R₁ et R₂ ont la signification indiquée pour la formule (1), et d'une amine de formule
(5) NH₂-B-(UR)ₙ
dans laquelle B, U, R et n ont la signification indiquée pour la formule (1), et en ce que l'on soumet le produit de condensation ensuite éventuellement à une sulfatation, ou en ce que l'on effectue la condensation d'un composé de formule (4) dans laquelle Hal représente un atome d'halogène et R₁ et R₂ ont la signification indiquée pour la formule (1) et d'une amine de formule (5), dans laquelle B, U, R et n ont la signification indiquée dans la revendication 1 et Z est un groupe β-hydroxyéthyle, et en ce que l'on soumet le produit de condensation ensuite à une sulfatation.

10. Utilisation des colorants anthraquinoniques réactifs vis-à-vis des fibres conformes aux revendications 1 à 7 ou des mélanges de colorants anthraquinoniques réactifs vis-à-vis des fibres conformes à la revendication 8 pour la teinture ou l'impression de matériaux fibreux contenant des groupes hydroxyle ou des atomes d'azote.

11. Utilisation conforme à la revendication 10 pour la teinture ou l'impression de matériaux en fibres de polyamide naturelles, en particulier de la laine.
